# EUROPEAN PATENT APPLICATION

(11) **EP 4 844 548 A1**
(43) Date of publication of application: **25.11.2026**
(21) Application number: 26179455.6
(22) Date of filing: 19.05.2026
(51) Int. Cl.: G06F 3/041, G06F 3/044

(54) **TOUCH SENSING APPARATUS AND DRIVING METHOD THEREOF**

(30) Priority: 19.05.2025 KR 20250064964; 09.02.2026 KR 20260025795
(71) Applicant: LX Semicon Co., Ltd., Daejeon 34027 (KR)
(72) Inventor: LEE, Chin Wan, 34027 Daejeon (KR); KIM, Youn Soo, 34027 Daejeon (KR); KIM, Hyejung, 34027 Daejeon (KR)
(74) Representative: Ter Meer und Partner mbB

(57) **Abstract**

A touch driver according to an embodiment of the present disclosure may include: a driving circuit configured to apply a first driving signal forming mutual capacitance with corresponding electrodes to first electrodes extending in a first direction and arranged in a second direction crossing the first direction during a first period, and apply a second driving signal forming mutual capacitance with corresponding electrodes to at least a portion of second electrodes extending in the second direction and arranged in the first direction during a second period after the first period; a sensing circuit configured to obtain first sensing information from the second electrodes during the first period, and obtain second sensing information from the first electrodes during the second period; and a calculation circuit configured to generate corrected sensing information using the first sensing information and the second sensing information during a third period after the second period.

## Description

### CROSS-REFERENCE TO RELATED APPLICATIONS

This application claims the benefit of the Korean Patent Application No. 10-2025-0064964 filed on May 19, 2025 and No. 10-2026-0025795 filed on February 09, 2026, which are hereby incorporated by reference as if fully set forth herein.

### BACKGROUND

### Field of the Invention

The present disclosure relates to a touch sensing apparatus and a driving method thereof, and more particularly, to a touch driving apparatus and a driving method thereof that reduce noise during touch recognition.

### Discussion of the Related Art

In various electronic devices including smartphones, tablet PCs, laptops, and automotive displays, touch screen panels are increasing in importance as core input interfaces that enable intuitive operation by users. In particular, as in-cell technology that integrates touch sensors into the internal structure of a display panel or on-cell technology that directly stacks them on top of the panel has become the next-generation standard to implement ultra-thin, lightweight, and high-resolution bezel-less designs, the physical design environment for touch sensing systems has become complex. In such a highly integrated structure, high-voltage switching signals for driving each pixel of the display and minute charge changes for sensing touch input are processed simultaneously in the same or adjacent layers. Therefore, strong common-mode noise and electromagnetic interference caused by parasitic capacitance generated during the display driving process directly flow into the touch sensing electrodes, causing a serious degradation in the quality of valid signals.

Furthermore, as the usage environment of mobile devices diversifies, irregular noise inflow due to external environmental factors such as power system noise generated when connecting a high-output fast charger TA, high-frequency noise from surrounding light sources such as fluorescent lamps or LCD backlights, and human-induced potential acts as a major technical barrier to securing the Signal-to-Noise Ratio SNR of the touch sensing circuit. These noise components cause linearity distortion in touch coordinate extraction, ghost touches where a touch is recognized even when there is no user input, or missed touches where actual touch input is ignored, resulting in a significant decrease in the reliability of the final product and the user experience.

Accordingly, recent touch driving technology is evolving beyond simple signal amplification toward maximizing noise immunity at the hardware circuit level and combining sophisticated filtering algorithms at the digital signal processing stage to stably extract minute capacitance changes even in harsh noise environments. In particular, as large-screen and high-frequency driving displays become common, optimization of high-performance analog front-ends AFE and related driving control logic, which can minimize mutual interference between adjacent sensing channels and more precisely convert received analog signals into digital data, has emerged as an essential task.

### SUMMARY

The present disclosure is intended to solve the above-mentioned technical needs, and a technical object thereof is to stably remove noise during touch driving to obtain accurate touch input information. In particular, a technical object of the present disclosure is to provide a touch driver and a driving method that compensate for capacitance imbalance between adjacent electrodes.

To achieve the above technical object, a touch driver according to an embodiment of the present disclosure may include: a driving circuit configured to apply a first driving signal forming mutual capacitance with corresponding electrodes to first electrodes extending in a first direction and arranged in a second direction crossing the first direction during a first period, and apply a second driving signal forming mutual capacitance with corresponding electrodes to at least a portion of second electrodes extending in the second direction and arranged in the first direction during a second period after the first period; a sensing circuit configured to obtain first sensing information from the second electrodes during the first period, and obtain second sensing information from the first electrodes during the second period; and a calculation circuit configured to generate corrected sensing information using the first sensing information and the second sensing information during a third period after the second period.

A touch sensing apparatus according to an embodiment of the present disclosure may include: first electrodes extending in a first direction and arranged in a second direction crossing the first direction; second electrodes extending in the second direction and arranged in the first direction; and a touch driver configured to apply a first driving signal inducing a change in charge of corresponding electrodes to the first electrodes during a first period, and apply a second driving signal inducing a change in charge of corresponding electrodes to at least a portion of the second electrodes during a second period after the first period; wherein the touch driver is configured to obtain first sensing information from the second electrodes during the first period, and obtain second sensing information from the first electrodes during the second period, and wherein the touch driver is configured to generate corrected sensing information using the first sensing information and the second sensing information during a third period after the second period.

A method of driving a touch driver according to an embodiment of the present disclosure may include: applying a first driving signal to first electrodes extending in a first direction and arranged in a second direction crossing the first direction; obtaining first sensing information from second electrodes extending in the second direction and arranged in the first direction; applying a second driving signal to at least a portion of the second electrodes; obtaining second sensing information from the first electrodes; and generating corrected sensing information using the first sensing information and the second sensing information.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a diagram illustrating a configuration of a touch sensing apparatus according to an embodiment of the present disclosure.
FIG. 2 is a diagram illustrating a portion of a sensing circuit according to an embodiment of the present disclosure.
FIG. 3 and FIG. 4 are diagrams illustrating operations for each period of a touch sensing apparatus according to an embodiment of the present disclosure.
FIG. 5A and FIG. 5B are diagrams illustrating operations of a driving circuit in a second period.
FIG. 6A to FIG. 6C are diagrams illustrating a process of generating corrected sensing information.
FIG. 7 is a diagram illustrating a touch sensing process in chronological order according to an embodiment of the present disclosure.
FIG. 8 is a flowchart illustrating a touch driving method according to an embodiment of the present disclosure.

### DETAILED DESCRIPTION OF THE DISCLOSURE

Advantages and features of the present disclosure, and methods for achieving them, will become apparent with reference to the embodiments described below in detail in conjunction with the accompanying drawings. However, the present disclosure is not limited to the embodiments disclosed below, but will be implemented in various different forms. These embodiments are provided only to make the disclosure of the present disclosure complete, and to fully inform those skilled in the art of the scope of the invention, and the present disclosure is only defined by the scope of the claims.

Throughout the specification, the same reference numerals refer to substantially the same components. In the following description, detailed descriptions of components and functions known in the art may be omitted if they are not related to the core configuration of the present disclosure.

When the terms "comprise," "have," "consist of," and the like are used herein, other parts may be added unless the term "only" is used. When a component is expressed in the singular, it includes the plural unless explicitly stated otherwise.

In interpreting the components, it is construed as including an error range even if there is no separate explicit description.

Terms such as first, second, etc., are used to describe various components, but these components are not limited by these terms. These terms are only used to distinguish one component from another component. Therefore, a first component mentioned below may be a second component within the technical spirit of the present disclosure.

The term "at least one" should be understood to include all possible combinations presented from one or more related items. For example, the meaning of "at least one of a first item, a second item, and a third item" may mean not only the first item, the second item, or the third item respectively, but also a combination of all items that can be presented from two or more among the first item, the second item, and the third item.

Each feature of the various embodiments of the present disclosure may be partially or entirely combined or combined with each other, technically various interlocking and driving are possible, and each embodiment may be implemented independently of each other or may be implemented together in an associated relationship.

Hereinafter, embodiments according to the present disclosure will be described in detail with reference to the accompanying drawings. In the following description, when it is determined that a detailed description of a known function or configuration related to the present disclosure may unnecessarily obscure the gist of the present disclosure, the detailed description thereof will be omitted.

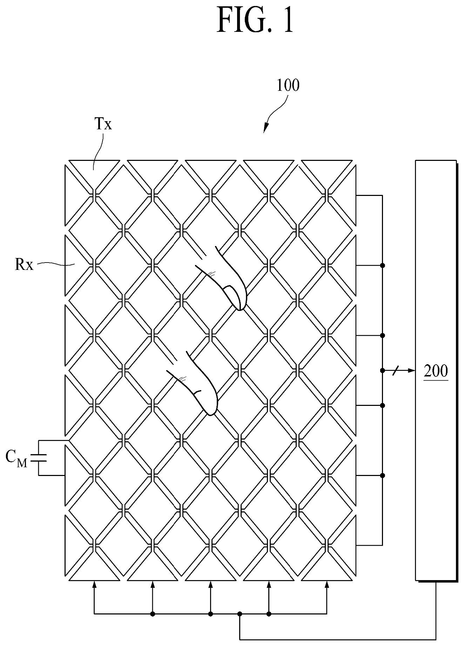

FIG. 1 is a diagram illustrating a configuration of a touch sensing apparatus according to an embodiment of the present disclosure.

A touch sensing apparatus according to an embodiment of the present disclosure may be mounted on televisions, set-top boxes, navigation systems, video players, Blu-ray players, personal computers, home theaters, smartphones, and the like. The touch sensing apparatus includes a touch screen 100 and a touch driver 200. The touch screen 100 may be implemented with capacitance-type touch sensors.

The touch screen 100 includes touch sensors that sense touch input, and touch input sensing methods can be divided into a self capacitance method and a mutual capacitance method. FIG. 1 illustrates mutual capacitance-type touch sensing, but the spirit of the present disclosure is not limited thereto.

The touch screen is a panel on which a plurality of electrode patterns for receiving a user's touch input are formed, and may include first electrodes Tx extending in a first direction such as a vertical direction and second electrodes Rx extending in a second direction crossing the first direction such as a horizontal direction. The first electrodes Tx and the second electrodes Rx are cross-arranged while being insulated from each other, and a predetermined mutual capacitance CM is formed at a point where they cross. When a user's finger or a conductive object approaches or contacts the crossing point, a part of the electric field lines going from the first electrode to the second electrode is absorbed by the object, and thus the mutual capacitance decreases.

The touch driver 200 is an integrated circuit that controls the operation of the touch screen 100 and processes touch signals, and may include a driving circuit, a sensing circuit, a calculation circuit, and the like. The driving circuit applies a predetermined driving signal such as a voltage signal in the form of a pulse to a plurality of driving electrodes, for example, first electrodes, sequentially or simultaneously. The sensing circuit senses a change in the amount of charge transmitted through a sensing electrode, for example, a second electrode. The sensing circuit includes an analog front-end AFE and amplifies minute analog signals received from the sensing electrode and converts them into digital data.

The calculation circuit receives the amount of change in capacitance of the sensing electrode Rx from the sensing circuit. When the change in mutual capacitance detected at a specific node, which is the intersection of Tx and Rx, is equal to or greater than a threshold value, the calculation circuit determines that a touch has occurred at the corresponding node. Thereafter, the touch driver 200 analyzes the distribution of the measured change amount to calculate touch coordinates and transmits them to a host system.

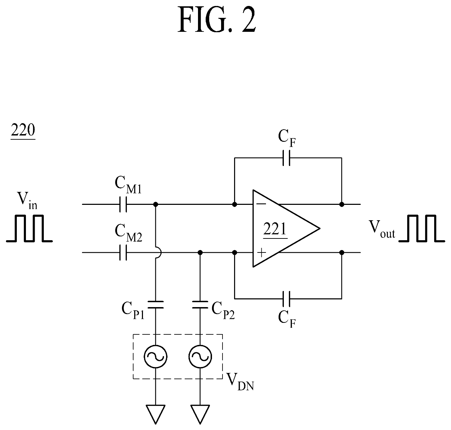

FIG. 2 is a diagram illustrating a portion of a sensing circuit according to an embodiment of the present disclosure.

The touch driver 200 according to an embodiment of the present disclosure is an integrated circuit that controls the operation of the touch screen 100 and processes touch signals, and may include a driving circuit 210, a sensing circuit 220, a calculation circuit 230, and the like.

The sensing circuit 220 senses a change in the amount of charge transmitted through a sensing electrode, for example, a second electrode. The sensing circuit 220 can suppress noise through a fully differential sensing architecture that differentially amplifies signals between adjacent receiving electrodes or channels. The sensing circuit 220 may include a differential amplifier 221, an analog filter 222, and an analog-to-digital converter 223.

The differential amplifier 221 differentially amplifies signals from adjacent sensing channels. The differential amplifier 221 includes a first input terminal such as an inverting input terminal - and a second input terminal such as a non-inverting input terminal +, and a feedback capacitor C_{F} is connected between each input terminal and an output terminal.

Looking at the operation principle in detail, as a driving signal Vᵢₙ is applied, changes in mutual capacitances C_{M1} and C_{M2} occurring from a pair of touch electrodes are transmitted to each input terminal of the differential amplifier 221. At this time, display noise V_{DN} flowing from the display panel flows into both ends of the amplifier as a common mode signal through parasitic capacitances C_{P1} and C_{P2} of the touch sensor.

The output voltage V_{OUT} output through the differential amplifier 221 may be defined as shown in Equation 1 below. [Equation 1] ${V}_{out} = \frac{{C}_{M 2} - {C}_{M 1}}{{C}_{F}} {V}_{in} + \frac{{C}_{p 2} - {C}_{p 1}}{{C}_{F}} {V}_{DN}$ The C_{P1} and C_{P2} refer to the parasitic capacitance of each adjacent channel or electrode. According to the present invention, since two adjacent channels are arranged at physically close positions and exposed to the same noise environment, the parasitic capacitance values of the two channels can be substantially matched such that C_{P1} is approximately equal to C_{P2}. (C_{P1}≒C_{P2}) In this case, the noise component in the right term of Equation 1 converges to 0, so that display noise is effectively removed.

As a result, the touch sensing apparatus according to the present embodiment can improve the Signal-to-Noise Ratio SNR of touch sensing by canceling common mode noise flowing from the outside through the differential sensing structure between adjacent channels and selectively amplifying only the difference component C_{M2}-C_{M1} of the mutual capacitance according to the user's touch input.

The analog filter 222 removes noise in unnecessary bands from the analog signal output from the differential amplifier 221. The analog filter 222 may include a low pass filter or a band pass filter and increases signal purity by filtering high-frequency noise or externally introduced noise remaining in the differential amplification process. In addition, the analog filter 222 may perform a function as an anti-aliasing filter to prevent an aliasing phenomenon in the analog-to-digital converter 223.

The analog-to-digital converter 223 converts the analog signal refined through the analog filter 222 into digital data having a predetermined resolution. The analog-to-digital converter 223 samples and quantizes the input voltage signal to generate touch data, and the generated touch data is used for algorithm calculations for touch presence determination and/or touch coordinate calculation.

In the differential-based touch sensing apparatus, a prerequisite for effectively removing common mode noise is that the physical characteristics of noise differentially input to a pair of sensing channels must be substantially the same. Since the differential amplifier 221 selectively amplifies only the difference component of the signals input to both ends, cancellation is perfectly achieved only when the amplitude and phase of the noise match.

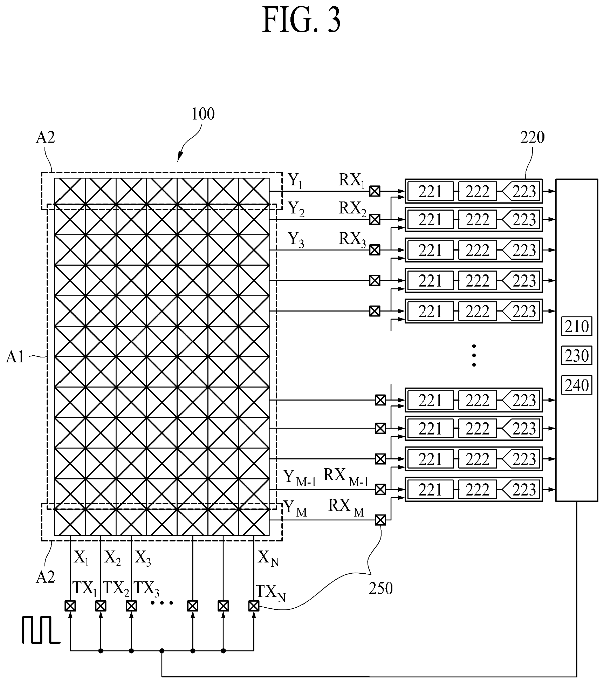

However, due to the process or design structure of an actual touch screen panel or display panel, all touch electrodes may not have the same area. In particular, the physical size of the electrodes for each channel may be different due to the arrangement density of touch electrodes, constraints on wiring routing, proximity to a bezel area, and the like. FIG. 3 exemplifies a case where sensing electrodes RX₁ and RX_{M} in the upper and lower portions A2 have a smaller area or size than sensing electrodes RX₂ to RX_{M-1} in the central portion A1.

The amount of display noise flowing into the sensing electrode is proportional to the size of the parasitic capacitances C_{P1} and C_{P2} formed between the electrode and the display panel such as a common electrode or cathode. Since this parasitic capacitance value directly depends on the area of the electrode, a change in the electrode area leads to a change in the amount of noise inflow.

Looking specifically with reference to Equation 1, among a plurality of sensing channels RX₁ to RX_{M}, channels RX₂ to RX_{M-1} located in the center of the panel are generally designed or arranged to have the same electrode size. In this case, the parasitic capacitances of the two differentially coupled channels are matched, so that the display noise component is effectively canceled, thereby obtaining a good touch signal.

On the other hand, a technical challenge arises when a channel RX₁ located at the periphery of the panel and an adjacent internal channel RX₂ are differentially coupled. For example, when the electrode area of the outermost electrode Y₁ is formed at a level of 78% of the central electrodes Y₂ to Y_{M-1} and the electrode area Y₂ of the adjacent channel is 100%, an electrode area deviation corresponding to about 22% exists between the two channels. This area difference eventually results in an imbalance in parasitic capacitance.

When the amount of noise inflow at the differential input terminals is different as described above, the differential amplifier amplifies the difference component of noise between channels that has not been canceled, just like a valid touch signal. That is, the larger the difference in electrode area, the larger the amplitude of residual noise included in the output, which sharply reduces the SNR in the corresponding area and causes shaking or misrecognition of touch coordinates. For example, in the relationship between the lower channel electrode Y_{M} having an 80% area ratio and the adjacent channel electrode Y_{M-1}, performance degradation due to noise amplification can be observed in the same manner.

The inventors recognized the problems caused by such physical electrode area differences and derived a touch sensing apparatus and a driving method capable of eliminating the problems. The touch sensing apparatus and driving method will be described below with reference to FIGS. 3 to 7.

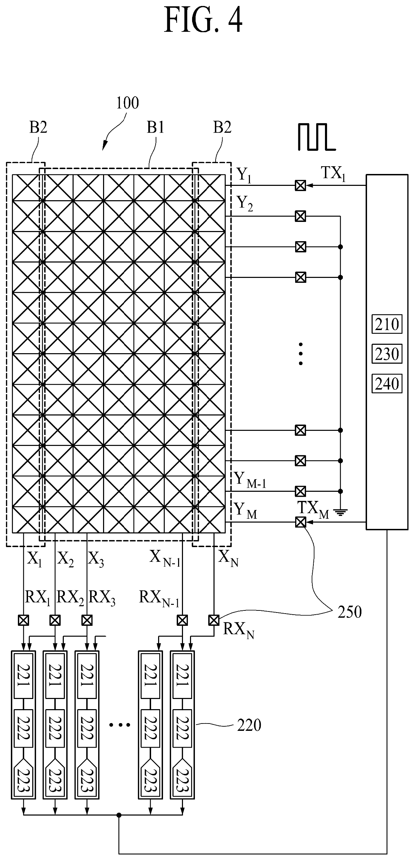

FIG. 3 and FIG. 4 are diagrams illustrating operations for each period of a touch sensing apparatus according to an embodiment of the present disclosure.

The touch sensing apparatus may include a touch screen panel 100 and a touch driver 200. At this time, the touch screen panel 100 may be mounted on a display device in an on-cell form.

The touch screen panel 100 may include first electrodes X₁ to X_{N} extending in a first direction such as a vertical direction and arranged in a second direction such as a horizontal direction crossing the first direction, and second electrodes Y₁ to Y_{M} extending in the second direction and arranged in the first direction. For example, the second electrodes Y₁ to Y_{M} may include second electrodes Y₂ to Y_{M-1} located in a first area A1; and second electrodes Y₁ and Y_{M} located in a second area A2. At this time, the second electrodes Y₁ and Y_{M} located in the second area A2 may have a smaller area or size than the second electrodes Y₂ to Y_{M-1} located in the first area A1.

In an embodiment of the present disclosure, the first electrode and the second electrode may be a driving channel and a sensing channel. That is, in a first period, as shown in FIG. 3, the first electrodes X₁ to X_{N} function as driving channels TX₁ to TX_{N}, and the second electrodes Y₁ to Y_{M} function as sensing channels RX₁ to RX_{M}. In a second period, as shown in FIG. 4, the first electrodes X₁ to X_{N} function as sensing channels RX₁ to RX_{N}, and the second electrodes Y₁ to Y_{M} function as driving channels TX₁ to TX_{M}.

The touch driver 200 may perform a touch sensing function while swapping the roles of the first electrodes X₁ to X_{N} and the second electrodes Y₁ to Y_{M} for each predefined time interval. That is, the touch driver 200 may apply a first driving signal or voltage to the first electrodes X₁ to X_{N} and receive sensing signals or voltages from the second electrodes Y₁ to Y_{M} to sense touch input during the first period. Also, the touch driver 200 may apply a second driving signal or voltage to the second electrodes Y₁ to _{YM} and receive sensing signals or voltages from the first electrodes X₁ to X_{N} to sense touch input during the second period. The touch driver 200 may generate final touch input data using the touch input data sensed during the first period and the touch input data sensed during the second period.

The touch driver 200 may include a driving circuit 210, a sensing circuit 220, a calculation circuit 230, a control circuit 240, a multiplexer 250, and the like.

The driving circuit 210 is a circuit that applies a predetermined driving signal to the driving electrodes TX₁, TX₂, and the like. The driving circuit 210 applies a driving signal such as an alternating voltage, a pulse voltage, or a multi-step driving waveform to a selected driving electrode according to scan timing in a frame unit or a line unit, thereby inducing charge transfer based on mutual capacitance formed between the driving electrode and a corresponding sensing electrode RX₁, RX₂, and the like. The driving circuit 210 may be configured to optimize the Signal-to-Noise Ratio of a touch signal by controlling the amplitude, frequency, duty ratio, and phase relationship of the driving signal according to a noise environment, a display driving state, or a touch mode such as a normal mode or a low power mode.

In one embodiment, the driving circuit 210 may apply a first driving signal to the first electrodes X₁ to X_{N} during a first period as in FIG. 3, and apply a second driving signal to at least a portion of the second electrodes Y₁ to Y_{M} during a second period after the first period as in FIG. 4.

The first driving signal forms a touch sensing channel via coupling with a corresponding electrode. Specifically, the first driving signal applied to the first electrodes from the driving circuit forms an electric field between the first electrodes and the second electrodes, thereby establishing mutual capacitance. At this time, when a touch object such as a finger or a pen is proximate, the first driving signal induces a change in the charge of the second electrodes resulting from the dispersion of the electric field toward the touch object. The sensing circuit may then detect the amount of this change to determine whether a touch has occurred and to calculate a touch position.

Similarly, the second driving signal forms a touch sensing channel via coupling with a corresponding electrode. Specifically, the second driving signal applied to the second electrodes from the driving circuit forms an electric field between the second electrodes and the first electrodes, thereby establishing mutual capacitance. At this time, when a touch object such as a finger or a pen is proximate, the second driving signal induces a change in the charge of the first electrodes resulting from the dispersion of the electric field toward the touch object. The sensing circuit may then detect the amount of this change to determine whether a touch has occurred and to calculate a touch position.

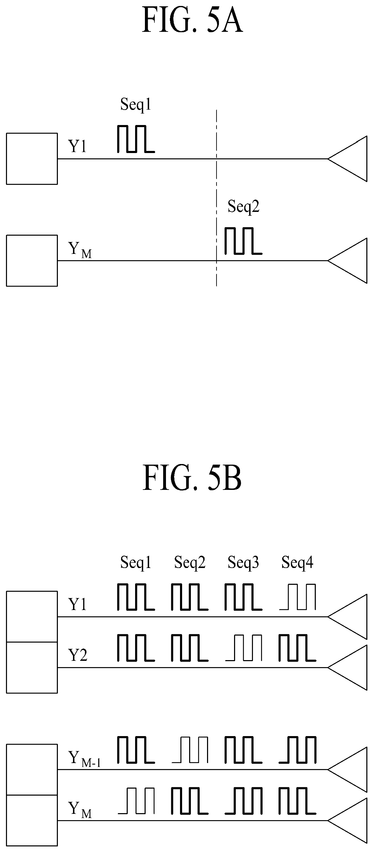

At this time, the driving circuit 210 may sequentially transmit driving signals to the second electrodes arranged in the second area as shown in FIG. 5A. Alternatively, the driving circuit 210 may simultaneously transmit driving signals to the second electrodes arranged in the second area as shown in FIG. 5B. When transmitting as in FIG. 5B, the driving circuit 210 may improve the SNR by transmitting some driving signals with an inverted phase such as a 180-degree phase difference.

The sensing circuit 220 is a circuit that detects and outputs an electrical change or sensing signal formed on the sensing electrodes RX₁, RX₂, and the like as a result of driving by the driving circuit 210. The sensing circuit 220 may include a differential amplifier connected to the sensing electrodes, an analog filter, an analog-to-digital converter, and the like. The sensing circuit 220 detects a change in mutual capacitance by amplifying a difference in the amount of charge flowing from each receiving electrode or an adjacent pair of receiving electrodes, and converts the detected analog signal into a digital value having a predetermined resolution to obtain sensing information corresponding to each sensing area or node. In addition, the sensing circuit 220 may perform common-mode component removal, band-limited filtering, offset correction, and reference voltage correction to reduce the influence of external noise and display driving noise.

In one embodiment, the sensing circuit 220 may receive first sensing signals from the second electrodes Y₁ to Y_{M} during the first period as in FIG. 3, and receive second sensing signals from the first electrodes X₁ to X_{N} during the second period as in FIG. 4. The sensing circuit 220 processes the first sensing signals and the second sensing signals to obtain first sensing information and second sensing information corresponding to each sensing area or node.

The calculation circuit 230 may calculate touch information such as touch presence or touch coordinates based on data or sensing information input from the sensing circuit 220. The calculation circuit 230 calculates an amount of change in capacitance by comparing a digital sample value corresponding to each receiving electrode with reference data, and calculates coordinate information for one or more touch points by performing a predetermined threshold determination, noise removal filtering, linear correction, interpolation calculation, and the like.

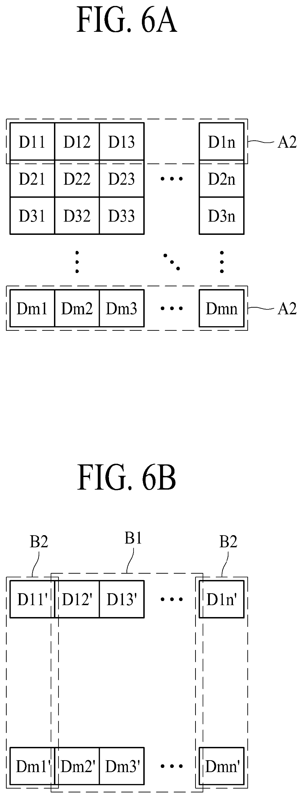

The calculation circuit 230 may generate corrected sensing information by combining the first sensing information and the second sensing information during a third period after the second period. Hereinafter, an embodiment of a process of generating corrected sensing information will be described with reference to FIGS. 6A to 6C.

FIGS. 6A to 6C are diagrams illustrating a process in which the calculation circuit 230 generates corrected sensing information by combining the first sensing information and the second sensing information.

The calculation circuit 230 calculates first touch information D11 to Dmn corresponding to each area or node based on the first sensing information received from the sensing circuit 220 as shown in FIG. 6A. At this time, as described above, the sensing information obtained in the second area may have an error due to the difference in electrode area.

The calculation circuit 230 calculates second touch information D11', D1n', Dm1', to Dmn' corresponding to a specific area based on the second sensing information received from the sensing circuit 220 as shown in FIG. 6B. At this time, the calculation circuit 230 may calculate the second touch information for the entire area or a part of the touch screen. For example, the calculation circuit 230 may calculate second touch information for a corresponding area based on sensing information of an area corresponding to an electrode to which the second driving signal is applied.

The calculation circuit 230 may calculate second touch information corresponding to each area based on sensing information obtained by the sensing circuit 220 in sensing areas B1 and B2 in an electrode structure as shown in FIG. 4. However, there is little difference between B1 and B2.

FIG. 6B illustrates second touch information of an area corresponding to the second area A2, for example, the top and bottom electrodes, obtained by applying the second driving signal to the second electrode and receiving a sensing signal from the first electrode.

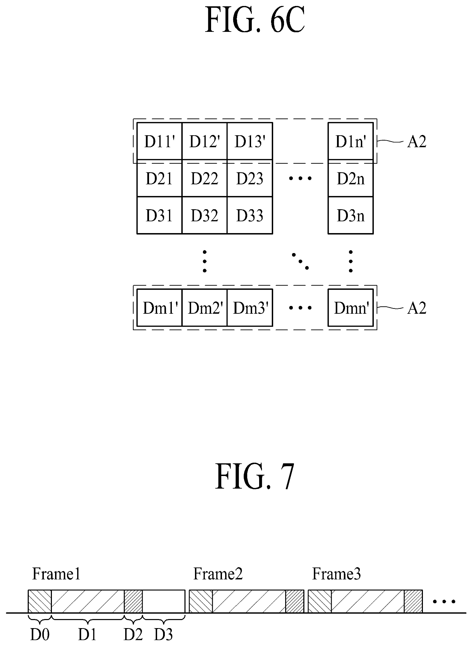

The calculation circuit 230 calculates corrected touch information corresponding to each area based on the first sensing information and the second sensing information as shown in FIG. 6C. As an example, the calculation circuit 230 may calculate corrected touch information by replacing at least a part of the first touch information D11 to Dmn with the second touch information D11', D1n', Dm1' to Dmn'. At this time, the calculation circuit 230 may perform the replacement process for an area where an error is likely to be included in the sensing information such as an area with a small electrode area or the outermost area. FIG. 6C illustrates that the calculation circuit 230 generates corrected touch information by changing the first touch information D11, D1n, Dm1 to Dmn corresponding to the second area A2 to the second touch information D11' to D1n', Dm1' to Dmn' and maintaining the first touch information corresponding to the remaining areas.

The corrected touch information calculated in this way is highly reliable touch information in which errors such as noise are compensated for.

The multiplexer 250 is connected to the first electrodes X₁ to X_{M} and the second electrodes Y₁ to Y_{M}, and changes connections between the electrodes and circuits during the first period and the second period. That is, during the first period, the multiplexer 250 connects the first electrodes to the driving circuit 210 and connects the second electrodes to the sensing circuit 220. During the second period, the multiplexer 250 connects the second electrodes to the driving circuit 210 and connects the first electrodes to the sensing circuit 220.

At this time, the control circuit 240 may control the multiplexer 250 to set connections between the electrodes and the circuits differently in each period.

FIG. 7 is a diagram illustrating a touch sensing process in chronological order according to an embodiment of the present disclosure.

The touch sensing process may proceed in the order of a first period D1, a second period D2, and a third period D3 for each touch frame such as Frame 1, Frame 2, and Frame 3.

In the first period D1, the touch sensing apparatus according to an embodiment of the present disclosure applies a first driving signal to the first electrodes X₁ to X_{N} and receives first sensing signals from the second electrodes Y₁ to Y_{M}. Then, the touch sensing apparatus processes the first sensing signals to obtain first sensing information corresponding to each sensing area or node.

In the second period D2, the touch sensing apparatus applies a second driving signal to at least a portion of the second electrodes Y₁ to Y_{M} and receives second sensing signals from the first electrodes X₁ to X_{N}. Then, the touch sensing apparatus processes the second sensing signals to obtain second sensing information corresponding to each sensing area or node. When the second driving signal is applied to only some of the second electrodes Y₁ to Y_{M}, the second period may be shorter than the first period.

In the third period D3, the touch sensing apparatus may generate corrected sensing information using the first sensing information and the second sensing information. As illustrated in FIG. 6, the touch sensing apparatus calculates first touch information D11 to Dmn corresponding to each area or node based on the first sensing information as in FIG. 6A. Next, the touch sensing apparatus calculates second touch information D11', D1n', Dm1' to Dmn' corresponding to a specific area based on the second sensing information as in FIG. 6B. Finally, the touch sensing apparatus may calculate corrected touch information by modifying at least a part of the first touch information D11, D1n, Dm1 to Dmn with the second touch information D11', D1n', Dm1' to Dmn'.

The touch sensing apparatus can also operate in a self capacitance method. That is, the touch sensing apparatus includes electrodes X and Y arranged in a mutual capacitance method, and includes a driving circuit and a sensing circuit that operate in one mode selected from a mutual capacitance mode and a self capacitance mode for the electrodes. The sensing circuit detects a touch input in a mutual capacitance method in a first operation mode, and detects and compensates for the presence of moisture on the panel surface or a wet touch state by measuring self capacitance for at least some of the electrodes in a second operation mode. For example, based on a self capacitance measurement result obtained in the second operation mode, the touch sensing apparatus can reduce false detection by water or moisture by correcting a threshold value or a valid area of mutual capacitance-based touch recognition performed in the first operation mode.

Accordingly, the touch sensing apparatus may further include a period D0 operating in the self capacitance method before the first period. In one embodiment, the self capacitance operation may be performed in a time-division manner. That is, the sensing circuit sets the first electrodes X₁ to X_{N} as self capacitance sensing electrodes in a first interval of the self capacitance operation (the second operation mode) and measures self capacitance for all first electrodes substantially simultaneously by maintaining the remaining electrodes at a reference potential. Thereafter, in a second interval, the sensing circuit sets the second electrodes Y₁ to Y_{M} as self capacitance sensing electrodes and can measure self capacitance for all second electrodes substantially simultaneously by maintaining the remaining electrodes at a reference potential. Through such a time-division operation, the touch sensing apparatus can quickly identify the degree of moisture inflow into the touch screen panel without changing the electrode pattern for mutual capacitance. Then, by using the result, the touch sensing apparatus can improve moisture sensing and wet touch compensation performance by dynamically correcting sensing parameters (threshold value of touch recognition, valid area, etc.) in the mutual capacitance method.

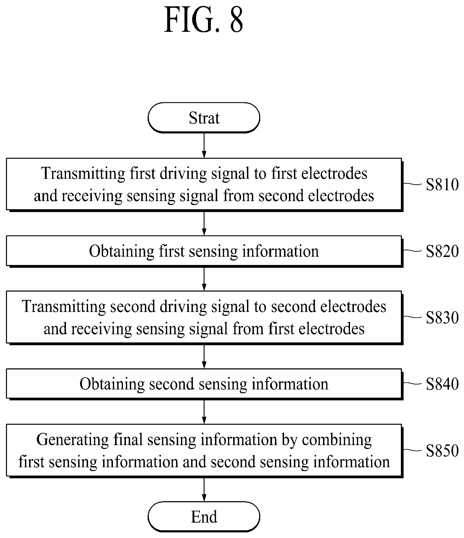

FIG. 8 is a flowchart illustrating a touch driving method according to an embodiment of the present disclosure.

The method may be performed by a touch driver. The touch driver according to an embodiment of the present disclosure may perform the touch recognition driving described in FIG. 3 to FIG. 7.

The touch driver transmits a first driving signal to first electrodes and receives a sensing signal from second electrodes step S810. The first electrodes extend in a first direction and are arranged in a second direction intersecting the first direction. Further, the second electrodes extend in the second direction and are arranged in the first direction. The second electrodes may include second electrodes arranged in a first region and second electrodes arranged in a second region located at the periphery of the first region. At this time, an area of the second electrodes arranged in the second region may be smaller than an area of the second electrodes arranged in the first region.

Step S810 may be performed in a first period.

The touch driver obtains first sensing information by processing the sensing signal received from the second electrodes step S820. The first sensing information may include touch information such as touch presence or touch coordinates corresponding to each region or node.

The touch driver transmits a second driving signal to the second electrodes and receives a sensing signal from the first electrodes step S830. At this time, the touch driver may sequentially or simultaneously transmit the second driving signal to the second electrodes arranged in the second region.

Step S830 may be performed in a second period after the first period.

The touch driver obtains second sensing information by processing the sensing signal received from the first electrodes step S840. The second sensing information may include touch information such as touch presence or touch coordinates corresponding to each region or node. Specifically, the second sensing information may include only the touch information for the second region.

The touch driver generates correction sensing information by using the first sensing information and the second sensing information step S850. Step S850 may be performed in a third period after the second period. At this time, as shown in FIG. 6A to FIG. 6C, the touch driver may replace the first sensing information for the second region, which was obtained from the second electrodes arranged in the second region during the first period, with the second sensing information for the second region, which was obtained from the first electrodes arranged in the second region during the second period.

Before the step of applying the driving signal to the first electrodes first period, the touch driver may operate in a self-capacitance manner. Accordingly, the touch driver may correct sensing parameters such as a threshold for touch recognition or an effective area in a mutual capacitance manner.

According to embodiments of the present disclosure, a touch driver and a driving method thereof can ensure favorable touch sensing performance by suppressing noise and recognition errors according to design conditions or environments.

Those skilled in the art to which the present disclosure pertains will understand that the above-described present disclosure may be implemented in other specific forms without changing its technical spirit or essential features.

In addition, the methods described in the present disclosure may be implemented, at least in part, using one or more computer programs or components. These components may be provided as a series of computer instructions through a computer-readable medium or a machine-readable medium including volatile and non-volatile memory. The instructions may be provided as software or firmware, and may be implemented in whole or in part in hardware configurations such as ASICs, FPGAs, DSPs, or other similar devices. The instructions may be configured to be executed by one or more processors or other hardware configurations, which, when executing the series of computer instructions, perform or enable the performance of all or part of the methods and procedures disclosed in the present disclosure.

Therefore, it should be understood that the embodiments described above are exemplary in all respects and not limiting. The scope of the present disclosure is indicated by the claims to be described later rather than the detailed description, and all changes or modifications derived from the meaning and scope of the claims and their equivalent concepts should be construed as being included in the scope of the present disclosure.

## Claims

1. A touch driver (100), comprising:
a driving circuit (110) configured to apply a first driving signal forming mutual capacitance with corresponding electrodes to first electrodes (210) extending in a first direction and arranged in a second direction crossing the first direction during a first period (T1), and apply a second driving signal forming mutual capacitance with corresponding electrodes to at least a portion of second electrodes (220) extending in the second direction and arranged in the first direction during a second period (T2) after the first period (T1);
a sensing circuit (120) configured to obtain first sensing information from the second electrodes (220) during the first period (T1), and obtain second sensing information from the first electrodes (210) during the second period (T2); and
a calculation circuit (130) configured to generate corrected sensing information using the first sensing information and the second sensing information during a third period (T3) after the second period (T2).

2. The touch driver (100) according to claim 1, further comprising a multiplexer (140) connected to the first electrodes (210) and the second electrodes (220).

3. The touch driver (100) according to claim 2, further comprising a control circuit (150) configured to control the multiplexer (140) to set connections between the driving and sensing circuits (110, 120) and the electrodes (210, 220) differently in each of the first period (T1) and the second period (T2).

4. The touch driver (100) according to any one of claims 1 to 3, wherein the second electrodes (220) include second electrodes arranged in a first region (A1) and second electrodes arranged in a second region (A2) at a periphery of the first region (A1), and
wherein an area of the second electrodes arranged in the second region (A2) is smaller than an area of the second electrodes arranged in the first region (A1).

5. The touch driver (100) according to any one of claims 1 to 4, wherein the first electrodes (210) include first electrodes arranged in a first region (B1) and first electrodes arranged in a second region (B2) at a periphery of the first region (B1), and
wherein an area of the first electrodes arranged in the first region (B1) and an area of the first electrodes arranged in the second region (B2) are identical.

6. The touch driver (100) according to any one of claims 3 to 5, wherein the calculation circuit (130) is configured to generate the corrected sensing information by replacing the first sensing information for the second region (A2) obtained during the first period (T1) with the second sensing information for the second region (A2) obtained during the second period (T2).

7. The touch driver (100) according to any one of claims 1 to 6, wherein the driving circuit (110) and the sensing circuit (120) are configured to operate in a mutual capacitance manner and a self-capacitance manner.

8. The touch driver (100) according to claim 7, further comprising a period of operating in the self-capacitance manner before the first period (T1).

9. The touch driver (100) according to any one of claims 1 to 8, wherein the sensing circuit (120) includes a differential amplifier (122) configured to differentially receive sensing signals from two adjacent first electrodes (210) or from two adjacent second electrodes (220).

10. A method of driving a touch driver (100) comprising the steps of:
applying a driving signal to first electrodes (210) extending in a first direction and arranged in a second direction crossing the first direction (S810);
obtaining first sensing information from second electrodes (220) extending in the second direction and arranged in the first direction (S820);
applying a driving signal to at least a portion of the second electrodes (220) (S830);
obtaining second sensing information from the first electrodes (210) (S840); and
generating corrected sensing information using the first sensing information and the second sensing information (S850).

11. The method according to claim 10, wherein the second electrodes (220) include second electrodes arranged in a first region (A1) and second electrodes arranged in a second region (A2) at a periphery of the first region (A1), and
wherein an area of the second electrodes (220) in the second region (A2) is smaller than in the first region (A1).

12. The method according to claim 10 or 11, wherein the first electrodes (210) include first electrodes arranged in a first region (B1) and first electrodes arranged in a second region (B2) at a periphery of the first region (B1), and
wherein an area of the first electrodes (210) in the first region (B1) and in the second region (B2) are identical.

13. The method according to claim 11 or 12, wherein the generating of the corrected sensing information (S850) includes replacing the first sensing information for the second region (A2) with the second sensing information for the second region (A2).

14. The method according to any one of claims 10 to 13, further comprising:
before applying the driving signal (S810), operating in a self-capacitance manner to correct sensing parameters for a mutual capacitance manner.

15. The method according to any one of claims 10 to 14, wherein obtaining the first sensing information (S820) includes differentially receiving sensing signals from two adjacent second electrodes (210).
